# NEUE EUROPÄISCHE PATENTSCHRIFT

(11) **EP 2 235 490 B2**
(45) Veröffentlichungstag und Bekanntmachung des Hinweises auf die Entscheidung über den Einspruch: **12.02.2020**
(45) Hinweis auf die Patenterteilung: 04.05.2016
(21) Anmeldenummer: 08870875.5
(22) Anmeldetag: 01.12.2008
(51) Int. Cl.: G01L 19/00, B60K 15/03, G01L 19/06

(54) **DRUCKAUSGLEICHSEINHEIT**
PRESSURE COMPENSATION UNIT
UNITÉ DE COMPENSATION DE PRESSION

(30) Priorität: 15.01.2008 DE 102008004358
(43) Veröffentlichungstag der Anmeldung: 06.10.2010
(73) Patentinhaber: Robert Bosch GmbH, 70442 Stuttgart (DE)
(72) Erfinder: ESLAMI, Reza, 71701 Schwieberdingen (DE); HABIBI, Masoud, 71701 Schwieberdingen (DE); OTT, Marcell, 89278 Nersingen (DE); FESSELE, Thomas, 70469 Stuttgart (DE)
(86) Internationale Anmeldenummer: PCT/EP2008/066549
(87) Internationale Veröffentlichungsnummer: WO 2009/089959

(56) Entgegenhaltungen:
- WO-A-02/090916
- DE-A1- 4 133 061
- US-A- 5 661 244
- US-A- 5 692 637
- US-A- 6 155 119

## Beschreibung

### Stand der Technik

US 5,661,244 bezieht sich auf einen Drucksensor, der zur Messung des Druckes eines Kraftstofftanks eingesetzt wird. Der Drucksensor umfasst eine Druckzuführleitung aus metallischem Material, welche in den Druckeinlass eines metallischen Gehäuses eingebracht ist und dort durch Schweißen fixiert ist. Das Gehäuse umfasst einen Flanschabschnitt im oberen Bereich, wobei der Flanschabschnitt mit einer äußeren Wand eines Tanks verbunden ist, der das zu messende Objekt darstellt, derart, dass sich der Drucksensor auf der Innenseite des Tanks befindet. Ein poröser Filter, der aus einem fluoroplastischen Kunststoffhergestellt ist, ist neben einem Atmosphärendruckeinlass angeordnet. Ein Klebeband ist am Atmosphärendruckeinlass lösbar befestigt. Der Drucksensor erlaubt einen sicheren Betrieb und eine sehr hohe Zuverlässigkeit hinsichtlich des Luftabschlusses für ein Sensorelement, weniger Beschränkungen hinsichtlich der Auslegung des Sensors für kleine Räume und vermeidet zuverlässig das Eintreten von Luft und Wasser bzw. Staub in das Innere des Sensors. Eine andere Anordnung wird z.B. im Dokument US 5 692 637 beschrieben.

Druckausgleichskomponenten werden innerhalb eines Tankdrucksensors verbaut und dienen dem Ausgleich eines Druckunterschiedes zwischen einem Referenzraum des Tankdrucksensors und der Umgebung. Der Tankdruck wird von unten an die Rückseite einer Siliziummembran geführt, während der in der Umgebung herrschende Druck als Referenzdruck von oben, so zum Beispiel durch eine Öffnung im Sensorgehäuse, auf die Vorderseite der Siliziummembran einwirkt. Um die Vorderseite der Siliziummembran gegen Wasser zu schützen, ist eine gaspenneable Filtermembran in eine Referenzdrucköffnung eingebaut. Die gaspermeabel ausgestaltete Filtermembran dient als Druckausgleichselement. Das Druckausgleichselement ist in der Regel wasserabweisend und flüssigkeitsundurchlässig ausgebildet und dient der Abdichtung der Referenzdrucköffhung des Tankdrucksensors der Tankeinbaueinheit gegen Flüssigkeiten. Durch diese Lösung soll unabhängig von der Einbaulage des Druckausgleichselementes das Eindringen von Spritzwasser sowie anderen flüssigen oder festen Medien in den Sensorraum unterbunden werden.

### Darstellung der Erfindung:

Der vorliegenden Erfindung liegt die Aufgabe zugrunde, eine Filtermembran eines Differenzdrucksensors gegen Überlast zu schützen und gleichzeitig einen schnellen Druckausgleich zwischen der Umgebung und einem Sensorinnenraum herbeizuführen.

Einer Lösung, die nicht Teil der Erfindung ist, folgend wird ein Gehäusedeckel mit integriertem Dom als Träger für eine Filtermembran eingesetzt. Die Filtermembran wird bevorzugt scheibenförmig ausgebildet und auf die im Gehäusedeckel integrierte, dort ausgebildete domförmige Erhebung vorzugsweise zentrisch aufgeklebt. Eine in der domförmigen Erhebung ausgeführte Durchführung gewährleistet die Verbindung eines Referenzdruckvolumens im Sensorinnenraum mit der diesen umgebenden Atmosphäre. Mittels einer an der im Gehäusedeckel ausgebildeten domförmigen Erhebung verrastbaren Kappe wird die aufgeklebte Filtermembran gegen Umwelteinflüsse abgeschirmt, sowie gegen mechanische Beschädigungen geschützt. Die an der domförmigen Erhebung, die im Gehäusedeckel ausgebildet ist, zu verrastende Kappe dient der Abschirmung der Filtermembran. Die an der domförmigen Erhebung integrierte Kappe weist keinerlei Berührungspunkte zur Filtermembran und deren Verklebung an der domförmigen Erhebung auf. Diese Ausführungsvariante zeichnet sich dadurch aus, dass die zentrisch aufgeklebte Filtermembran von unten durch die domförmige Erhebung gegenüber Last, wie zum Beispiel Wasser, geschützt ist. Des Weiteren wird durch diese Ausführungsvariante, die nicht Teil der Erfindung ist, gewährleistet, dass vermieden wird, dass eine Referenzluftbohrung durch eingetretene Schmutzpartikel verschlossen ist, oder sich der Innenraum des Tankdrucksensors mit Wasser füllt.

In einer Ausführungsform des der Erfindung zugrunde liegenden Gedankens dient ein Gehäusedeckel als Träger für die Filtermembran. Die vorgeschlagene Filtermembran, die bevorzugt wasserabweisend und flüssigkeitsundurchlässig ausgebildet ist, wird an ihrem Rand auf den Gehäusedeckel aufgeklebt, wobei die Filtermembran durch eine Kappe geschützt ist. Ein im Gehäusedeckel ausgebildeter Steg verhindert ein Durchhängen der flächigen Filtermembran. In einer die Filtermembran von oben her schützenden Kappe sind Kanäle ausgeführt. Die Kappe liegt flächig direkt auf der Filtermembran auf und stützt somit die Filtermembran ab. Die Kanäle sorgen für einen ausreichenden Luftdurchlass, um Druckunterschiede zwischen der Umgebung und einem Referenzraum des Sensors zu gewährleisten. Im Gehäusedeckel, der als Träger für die Filtermembran dient, sind Öffnungen ausgebildet, welche eine Verbindung eines Referenzdruckvolumens im Sensorinnenraum mit der diese umgebenden Atmosphäre gewährleisten. Für diese Ausführungsvariante ist es günstig, den Einbauort der Druckausgleichseinheit so zu wählen, dass die freie Filtermembran durch den Einbauort und die Einbaulage zusätzlich geschützt ist.

Die Vorteile der obenstehend beschriebenen Ausführungsform des der Erfindung zugrunde liegenden Gedankens liegen darin, dass flüssige Medien sich nicht auf der Filtermembran ansammeln und damit zu einer Vereisung der Referenzluftöffuung fuhren. Die in der Ausführungsvariante eingesetzte, am Gehäusedeckel im Randbereich verklebte Filtermembran wird durch ein kappenförmiges Abdeckelement von oben gegen Überlast geschützt. Des Weiteren zeichnet sich die erfindungsgemäß vorgeschlagene Druckausgleichseinheit durch eine größere Fläche und einen dadurch gegebenen besseren Druckausgleich im Referenzraum aus.

### Kurze Beschreibung der Zeichnungen

Anhand der Zeichnungen wird die Erfindung nahestehend eingehender beschrieben. Es zeigt
- Figur 1: eine Explosionsdarstellung einer Ausführungsform der Druckausgleichseinheit, die nicht Teil der Erfindung ist, integriert im Deckel eines Tankdrucksensors,
- Figur 2: eine Darstellung der Druckausgleichseinheit, die nicht Teil der Erfindung ist, mit Wiedergabe eines Luftführungspfades,
- Figur 3: eine Explosionsdarstellung einer Ausführungsvariante der erfindungsgemäß vorgeschlagenen Druckausgleichseinheit, integriert im Deckel eines Tankdrucksensors,
- Figur 4: die sich einstellende Luftdurchführung bei montiertem kappenförmigem Verschlusselement und
- Figur 5: eine perspektivische Ansicht der Innenseite des kappenförmigen Verschlusselementes.

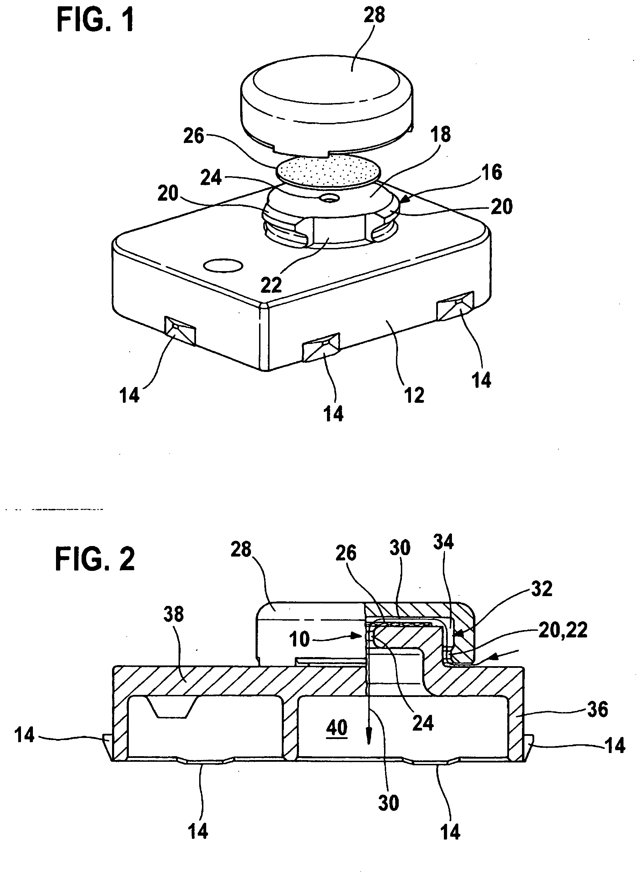

Der Darstellung gemäß Figur 1 ist die Explosionsdarstellung einer ersten Ausführungsform, die nicht Teil der Erfindung ist, der Druckausgleichseinheit (integriert im Deckel eines Tankdrucksensors) zu entnehmen.

Figur 1 zeigt einen Gehäusedeckel 12 eines Tankdrucksensors, der eine Anzahl von Rastnasen 14 aufweist. Mit diesen ist der Gehäusedeckel 12 in einem Tankdrucksensor geklemmt. Der Gehäusedeckel 12 umfasst eine domförmig ausgebildete Erhebung 16. Die domförmige Erhebung 16 ist durch eine hier kreisförmig ausgestaltete Planfläche 18 begrenzt. Am Umfang der domförmigen Erhebung 16 verlaufen eine Anzahl von kreisbogenförmig ausgebildeten Rastsegmenten 20, die jeweils durch eine Unterbrechung 22 in Umfangsrichtung voneinander getrennt sind. In der Planfläche 18 der domförmigen Erhebung 16 befindet sich außerdem eine Luftöffnung 24. Der Gehäusedeckel 12 gehört zu den Druckausgleichskomponenten der Druckausgleichseinheit 10.

Auf die Planfläche 18 der domförmigen Erhebung wird eine Filtermembran 26 aufgeklebt, die bevorzugt als wasserabweisende und flüssigkeitsundurchlässige Filtermembran ausgebildet ist. Diese dient zum Schutz des Innenraumes des Tankdrucksensors gegen flüssige Medien und Staub. Damit kann unabhängig von der Einbaulage des Gehäusedeckels 12 eines Tankdrucksensors das Eindringen von Spritzwasser sowie anderen flüssigen oder festen Medien in das Gehäuse des Tankdrucksensors unterbunden werden.

Die auf die Planfläche 18 der domförmigen Erhebung 16 aufgeklebte Filtermembran 26 wird durch ein an den Rastsegmenten 20, die am Umfang der domförmigen Erhebung 16 ausgebildet sind, verrastbares kappenförmiges Abdeckelement 28 geschützt. Das kappenförmige Abdeckelement 28 schützt die aufgeklebte, wasserabweisende, flüssigkeitsundurchlässige, jedoch gaspermeable Filtermembran 26 gegen Umwelteinflüsse sowie mechanische Beschädigungen. Das kappenförmige Abdeckelement 28 weist keine Berührpunkte zur Filtermembran 26 und deren Verklebung an der Planfläche 18 der domförmigen Erhebung 16 auf.

Wie aus der Darstellung gemäß Figur 2 hervorgeht, bildet sich bei an der domförmigen Erhebung 16 verrastetem kappenförmigen Abdeckelement 28 im Bereich einer Verrastung 32, die durch die Rastsegmente 20 am Umfang der domförmigen Erhebung 16 und der Innenseite des kappenförmigen Abdeckelementes 28 gebildet wird, eine Spaltweite 34 aus. Mit Bezugszeichen 30 ist eine sich von außen nach innen darstellende Luftströmung gekennzeichnet. Aus der Darstellung gemäß Figur 2 geht hervor, dass die auf der Oberseite der Planfläche 18 aufgeklebte Filtermembran 26 durch den Spalt 34 mit Umgebungsdruck beaufschlagt ist und andererseits von der Innenseite der domförmigen Erhebung 16 her, d. h. durch die Luftöffnung 24 in der domförmigen Erhebung 16 mit den innerhalb eines Referenzraumes 40 des Tankdrucksensors herrschenden Druckniveaus.

Die als Druckausgleichselement dienende, wasserabweisende, flüssigkeitsundurchlässige, jedoch gaspermeable Filtermembran 26 ermöglicht einen schnellen Druckausgleich zwischen der Umgebung und dem Referenzraum 40. Durch das an den Rastsegmenten 20 der domförmigen Erhebung 16 kappenförmige Abdeckelement 28 ist die an der Planfläche 18 verklebte Filtermembran 26 gegen mechanische Überlastung, wie zum Beispiel auftreffendes Wasser, zuverlässig geschützt. Ferner wird durch das an den Rastsegmenten 20 im Rahmen der Verrastung 32 lösbar befestigte kappenförmige Abdeckelement 28 sichergestellt, dass keine Partikel oder Ähnliches die Filtermembran 26 beschädigen können sowie keine Partikel oder dergleichen durch die Lufteintrittsöffliung 24 in den Referenzraum 40 des Tankdrucksensors gelangen. Die Luftdurchflussfläche der Filtermembran 26 ist größer bemessen als die Fläche der Luftöffnung 24.

Des Weiteren wird durch die Lösung gemäß der ersten Ausführungsvariante, die nicht Teil der Erfindung ist, wie in den Figuren 1 und 2 dargestellt, verhindert, dass die Luftöffnung 24 zwischen dem Referenzdruckraum 40 des Tankdrucksensors und der Umgebung, zum Beispiel durch einen sich dort anlagernden Wassertropfen, verschlossen wird, so dass kein Druckausgleich zwischen der Umgebung und dem Referenzdruckraum 40 des Tankdrucksensors stattfinden kann.

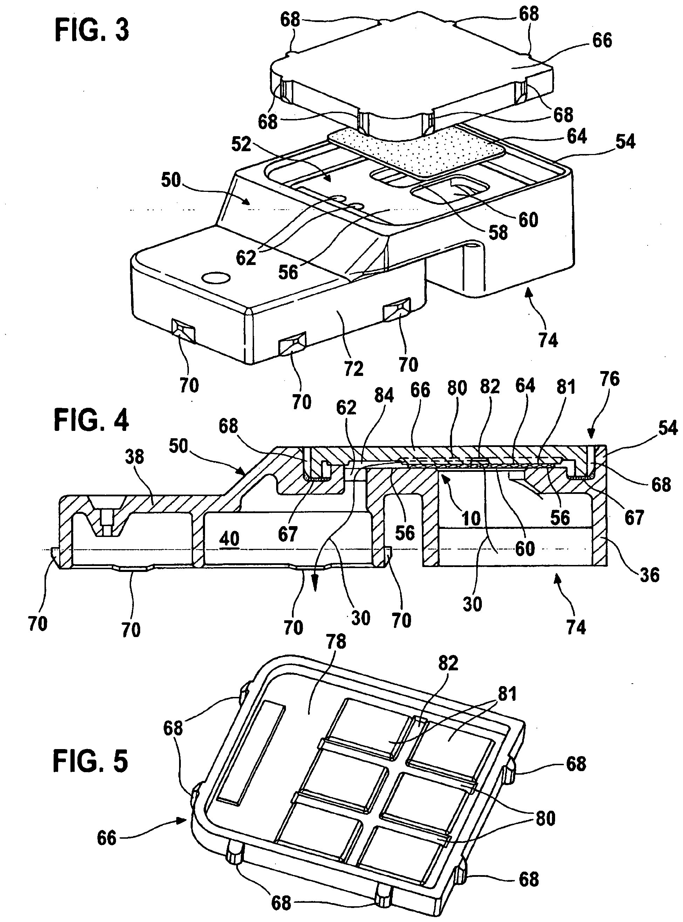

In der Darstellung gemäß Figur 3 ist eine Explosionsdarstellung einer Ausführungsvariante der erfindungsgemäß vorgeschlagenen Druckausgleichseinheit gezeigt.

Figur 3 zeigt einen Gehäuseedeckel 50, welcher einerseits eine Einlassöffnung 74 auf weist, an der Umgebungsdruckniveau ansteht, und andererseits eine Wand 72 aufweist, an welcher eine Anzahl von Klemmnasen 70 ausgeführt sind. Mit diesen ist der Gehäusedeckel 50 am Gehäuse eines Tankdrucksensors geklemmt.

Der Gehäusedeckel 50 gemäß der Explosionsdarstellung in Figur 3 umfasst eine Vertiefung 52. Die Vertiefung 52 ist einerseits von einer sich in Umfangsrichtung erstreckenden Wandung 54 und andererseits von einem Boden 56 begrenzt. Im Boden 56 befindet sich eine Öffnung 60, die durch einen Steg 58 geteilt ist. Im Boden 56 der Vertiefung 52 befindet sich ferner mindestens ein Luftloch 62. Eine Filtermembran 64 wird am Rand der Öffnung 60 auf den Boden 56 aufgeklebt. Die bevorzugt wasserabweisend und flüssigkeitsundurchlässig ausgebildete Filtermembran 64 wird durch den Steg 58 abgestützt und andererseits durch das innerhalb der Wandung 54 des weiteren Gehäusedeckels 50 verklemmbare kappenförmige Abdeckelement 66 geschützt. Das kappenförmige Abdeckelement 66 umfasst an ihrem Umfang eine Anzahl von Klemmnasen 68, über welche das kappenförmige Abdeckelement 66 in der die Vertiefung 52 begrenzenden Wandung 54 verrastbar ist. Das kappenförmige Abdeckelement 66 kann zudem - wie in Figur 3 angedeutet - durch Verklebungen 67 am weiteren Gehäusedeckel 50 befestigt werden.

Figur 4 zeigt eine Seitenansicht der Darstellung der Luftführung in der Druckausgleichseinheit gemäß der Explosionsdarstellung in Figur 3.

Figur 4 ist zu entnehmen, dass das kappenförmige Abdeckelement 66 in der Vertiefung 52 (vergleiche Darstellung gemäß Figur 3) geklemmt ist und mit ihren Klemmnasen 68 an der Innenseite der die Vertiefung 52 begrenzenden Wandung 54 anliegt. Oberhalb der Öffnung 60 im Deckel 50 befindet sich die Filtermembran 64. Oberhalb der Filtermembran 64 erstreckt sich das kappenförmige Abdeckelement 66. Wie der Darstellung gemäß Figur 4 entnommen werden kann, verläuft die Luftströmung 30, ausgehend von der Einlassöffnung 74, durch die gaspermeabel ausgebildete Filtermembran 64, über Kanäle 80, 82, durch Luftlöcher 62 in den Referenzdruckraum 40 des Tankdrucksensors. Der Spalt 84 ist zwischen dem Gehäusedeckel 50 und der Innenseite 78 des kappenförmigen Abdeckelementes 66 begrenzt. Durch die die Öffnung 60 samt Steg 58 abdeckende gaspermeable Filtermembran 64, die als Druckausgleichselement dient, ist ein Druckausgleich zwischen dem an der Einlassöffnung 74 des Gehäusedeckels 50 anstehenden Umgebungsdruck und dem im Referenzraum 40 anstehenden Druckniveau möglich. Wie aus der Darstellung gemäß Figur 4 hervorgeht, welche das kappenförmige Abdeckelement 66 im in der Vertiefung 52 geklemmten und verklebten Zustand wiedergibt, ist die Filtermembran 64 sowohl gegen mechanische Beschädigung als auch gegen Überlastung durch auf diese auftreffendes Spritzwasser wirksam geschützt. Die Lage des kappenförmigen Abdeckelementes 66 ermöglicht die Luftströmung 30, ausgehend von der Einlassöffnung 74, durch die gaspermeable Filtermembran 64 in Richtung des Spaltes 84. Das kappenförmige Abdeckelement 66 ist bevorzugt entlang seines Umfangs in die Vertiefung 52 an der Oberseite des Gehäusedeckels 50 eingeklebt, vergleiche Bezugszeichen 67 in Figur 4. Das kappenförmige Abdeckelement 66 liegt mit Erhebungen 81, die an ihrer Innenseite 78 ausgebildet sind, direkt auf der Filtermembran 64 auf (vergleiche Darstellung gemäß Figur 5).

Figur 5 zeigt eine perspektivische Ansicht der Innenseite des kappenförmigen Abdeckelementes 66 gemäß der Darstellung in den Figuren 3 und 4.

Das kappenförmige Abdeckelement 66, das bevorzugt als Spritzgussbauteil gefertigt ist, weist an seinem Umfang eine Anzahl von Klemmnasen 68 auf. Mittels der Klemmnasen 68 ist das kappenförmige Abdeckelement 66 innerhalb der Wandung 54 der Vertiefung 52 positioniert. An einer Innenseite 78 des kappenförmigen Abdeckelementes 66 erstrecken sich Luftkanäle 80, 82. Die mit Bezugszeichen 80 bezeichneten Luftkanäle erstrecken sich in Längsrichtung, d. h. parallel zum Steg 58, der innerhalb der Öffnung 60 im Boden 56 der Vertiefung 52 im Gehäuseteil 50 ausgeführt ist. Mit Bezugszeichen 82 ist ein Luftkanal an der Innenseite 78 des kappenförmigen Abdeckelementes 66 bezeichnet, der sich in Querrichtung erstreckt und der die Luftkanäle 80, die sich in Längsrichtung erstrecken, miteinander verbindet. Durch die Luftkanäle 80, 82 werden an der Innenseite 78 erhaben über diese hervorstehende Erhebungen 81 voneinander getrennt. Bei den Erhebungen 81 handelt es sich um flächige Bereiche, die im in Figur 4 dargestellten Einbauzustand des kappenförmigen Abdeckelementes 66 direkt auf der Oberseite der Filtermembran 64 aufliegen. Eine luftdichte Verbindung des kappenförmigen Abdeckelementes 66 innerhalb der Vertiefung 52 mit dem Gehäusedeckel 50 erfolgt durch eine Verklebung 67 entlang des Umfangs des kappenförmigen Abdeckelementes 66. Aufgrund einer derart hergestellten luftdichten Verbindung erfolgt ein Druckausgleich zwischen dem Referenzdruckraum 40 und der Atmosphäre nur über die von der Filtermembran 64 abgedeckte Öffnung 60 zum Referenzdruckraum 40.

Aufgrund der Gestaltung der Innenseite 78 der kappenförmigen Abdeckung 66 - wie in Figur 5 dargestellt - ergibt sich die Möglichkeit der in Figur 4 dargestellten Luftführung 30, wenn die Kappe 66 in der Vertiefung 52 des Gehäusedeckels 50 positioniert und verklebt ist. Über die Luftkanäle 80, 82 an der Innenseite 78 der kappenförmigen Abdeckung 66 verläuft die Luftführung 30 im verbauten Zustand der kappenförmigen Abdeckung 66 oberhalb der gaspermeabel ausgeführten Filtermembran 64 in Richtung des in Figur 4 dargestellten Spaltes 84 zwischen dem Gehäusedeckel 50 und der Innenseite 78 der in der Vertiefung 52 luftdicht verbauten kappenförmigen Abdeckung 66.

Ebenso wie die kappenförmige Abdeckung 66 wird auch der in Figur 4 dargestellte Deckel 50 im Wege des Kunststoffspritzgießverfahrens hergestellt. Dies bedeutet, dass am Deckel 50 der erfindungsgemäß vorgeschlagenen Druckausgleichseinheit 10 die Einlassöffnung 74 in einem Arbeitsgang ebenso wie die Vertiefung 52 zur Aufnahme der kappenförmigen Abdeckung 66 gespritzt werden kann. Bei der Fertigung des Gehäusedeckels 50 im Wege des Kunststoffspritzgießverfahrens können die Luflöffnungen 62, der die Öffnung 60 teilende Steg 58, die Klemmnasen 70, die Wandung 54, der Boden 56 der Vertiefung 52 in einem Arbeitsschritt gefertigt werden. Die Schnittdarstellung gemäß Figur 4 zeigt, dass eine Wand 36 des Gehäusedeckels 50 und die kappenförmige Abdeckung 66 je nach mechanischen Anforderungen in unterschiedlichen Dicken ausgelegt sein können.

In der in den Figuren 1 und 2 dargestellten ersten Ausführungsvariante der Druckausgleichseinheit, die nicht zur Erfindung gehört, ist die Filtermembran 26 von unten durch die domförmige Erhebung 16 gegenüber Last, zum Beispiel Spritzwasser, geschützt und das Verschließen der Luftöffnung 24 durch Wasser aufgrund der wasserabweisenden Filtermembran ausgeschlossen; in der in den Figuren 3, 4 und 5 dargestellten Ausführungsvariante der erfindungsgemäß vorgeschlagenen Druckausgleichseinheit 10 ist die Filtermembran 26 durch die in der Vertiefung 52 luftdicht verbaute kappenförmige Abdeckung 66 gegen Überlast und sich ansammelndes Spritzwasser geschützt. Der Tankdrucksensor gemäß der in den Figuren 3 und 4 dargestellten Ausführungsvariante ist so einzubauen, dass die offene Einlassöffnung 74 nicht nach oben zeigt. Die in den Figuren 3, 4 und 5 dargestellte Ausführungsvariante der erfindungsgemäß vorgeschlagenen Druckausgleichseinheit wird bevorzugt so eingebaut, dass die an der Innenseite 78 mit den Luftkanälen 80, 82 versehene Kappe 66 nach oben steht und die darunter liegende Filtermembran 64 abdeckt, und ein Ansammeln von Wasser in der Einlassöffnung und dessen Vereisung dort zu vermeiden.

Die erfindungsgemäß vorgeschlagene Druckausgleichseinheit gewährleistet, dass flüssige Medien sich nicht auf den Filtermembranen 26, 64 ansammeln und damit eine Vereisung, insbesondere der Luftöffnung 60, bewirken. Die Filtermembran 26, 64 wird durch die Kappe 28, 66 von oben gegenüber Last, zum Beispiel auftreffendes Spritzwasser, wirksam geschützt. Des Weiteren kann durch die erfindungsgemäß vorgeschlagene Lösung die Fläche der Filtermembran 26, 64 erheblich vergrößert werden, wodurch Wasser die Öffnung 24, 60 und die Filtermembran 26, 64 nicht benetzen kann. Dadurch kann vermieden werden, dass die Öffnung 24, 60 durch gefrierendes Wasser verschlossen wird.

## Patentansprüche

1. Druckausgleichseinheit (10) für einen Differenzdrucksensor, insbesondere für einen Tankdrucksensor eines Kraftfahrzeuges, mit einem Gehäusedeckel (50) und einer gaspermeablen Filtermembran (64), die eine Luftöffnung (60) des Gehäusedeckels überdeckt,
**dadurch gekennzeichnet, dass** die gaspermeable Filtermembran (64) von einem kappenförmigen Abdeckelement (66) überdeckt ist, welches mit dem Gehäusedeckel (50)
der Druckausgleichseinheit verbindbar ist, wobei der Gehäusedeckel (50) eine Luftöffnung (60) zur Atmosphäre aufweist, die durch die Filtermembran (64) überdeckt ist, sowie mindestens eine Luftöffnung (62) zu einem Referenzdruckraum (40) und die Luftöffnungen (60, 62) im Boden (56) einer Vertiefung (52) im Gehäusedeckel (50) ausgeführt sind, in der das kappenförmige Abdeckelement (66) luftdicht eingeklebt (67) ist und an einer Innenseite (78) des kappenförmigen Abdeckelementes (66) Kanäle (80, 82) zur Luftdurchführung (30) ausgeführt sind und an der Innenseite (78) die Filtermembran (64) abstützende Erhebungen (81) ausgeführt sind.

2. Druckausgleichseinheit (10) gemäß Anspruch 1, **dadurch gekennzeichnet, dass** die Filtermembran (64) aus einem wasserabweisenden, flüssigkeitsundurchlässigen Material gefertigt ist.

3. Druckausgleichseinheit (10) gemäß Anspruch 1, **dadurch gekennzeichnet, dass** im in der Vertiefung (52) verbauten Zustand des kappenförmigen Abdeckelementes (66) die Kanäle (80, 82) an der Innenseite (78) des kappenförmigen Abdeckelementes (66) die Luftdurchführung (30) von der Einlassöffnung (74) zu der mindestens einen Öffnung (62) in den Referenzdruckraum (40) vornehmen.

4. Druckausgleichseinheit (10) gemäß Anspruch 1, **dadurch gekennzeichnet, dass** die Filtermembran (64) durch die Erhebungen (81) an der Innenseite (78) abgestützt ist und ein Luftdurchlass durch die Kanäle (80, 82) erfolgt.

5. Verwendung der Druckausgleichseinheit (10) gemäß einem oder mehreren der vorhergehenden Ansprüche in Verbindung mit einem Tankdrucksensor, insbesondere im Kraftstofftank eines Kraftfahrzeuges.

## Claims

1. Pressure compensation unit (10) for a differential pressure sensor, in particular for a tank pressure sensor of a motor vehicle, having a housing lid (50) and having a gas-permeable filter membrane (64) which covers an air opening (60) of the housing lid, **characterized in that** the gas-permeable filter membrane (64) is covered by a cap-like cover element (66) which can be connected to the housing lid (50) of the pressure compensation unit, wherein the housing lid (50) has an air opening (60) to the atmosphere, which air opening is covered by the filter membrane (64), and at least one air opening (62) to a reference pressure chamber (40) and the air openings (60, 62) are formed in the base (56) of a depression (52) in the housing lid (50), in which depression the cap-like cover element (66) is adhesively bonded (67) in air-tight fashion, and on an inner side (78) of the cap-like cover element (66), there are formed ducts (80, 82) for the leadthrough of air (30), and on the inner side (78), there are formed elevations (81) which support the filter membrane (64).

2. Pressure compensation unit (10) according to Claim 1, **characterized in that** the filter membrane (64) is manufactured from a water-repellent, liquid-impermeable material.

3. Pressure compensation unit (10) according to Claim 1, **characterized in that** when the cap-like cover element (66) is in the installed state in the depression (52), the ducts (80, 82) on the inner side (78) of the cap-like cover element (66) allow the leadthrough of air (30) from the inlet opening (74) to the at least one opening (62) into the reference pressure chamber (40).

4. Pressure compensation unit (10) according to Claim 1, **characterized in that** the filter membrane (64) is supported by the elevations (81) on the inner side (78), and a passage of air takes place through the ducts (80, 82).

5. Use of the pressure compensation unit (10) according to one or more of the preceding claims in conjunction with a tank pressure sensor, in particular in the fuel tank of a motor vehicle.

## Revendications

1. Unité de compensation de pression (10) pour un capteur de pression différentielle, en particulier pour un capteur de pression de réservoir d'un véhicule automobile, comprenant un couvercle de boîtier (50) et une membrane de filtre perméable aux gaz (64) qui recouvre une ouverture d'air (60) du couvercle de boîtier, **caractérisée en ce que** la membrane de filtre perméable aux gaz (64) est recouverte par un élément de recouvrement en forme de capuchon (66) qui peut être connecté au couvercle de boîtier (50) de l'unité de compensation de pression, le couvercle de boîtier (50) présentant une ouverture d'air (60) vers l'atmosphère, laquelle est recouverte par la membrane de filtre (64), ainsi qu'au moins une ouverture d'air (62) vers un espace de pression de référence (40) et les ouvertures d'air (60, 62) étant réalisées dans le fond (56) d'un renfoncement (52) dans le couvercle de boîtier (50), renfoncement dans lequel est collé (67) de manière étanche à l'air l'élément de recouvrement en forme de capuchon (66), et des canaux (80, 82) pour le passage de l'air (30) étant réalisés, au niveau d'un côté intérieur (78) de l'élément de recouvrement en forme de capuchon (66) et des rehaussements (81) supportant la membrane de filtre (64) étant réalisés au niveau du côté intérieur (78) .

2. Unité de compensation de pression (10) selon la revendication 1, **caractérisée en ce que** la membrane de filtre (64) est fabriquée en un matériau repoussant l'eau, imperméable aux liquides.

3. Unité de compensation de pression (10) selon la revendication 1, **caractérisée en ce que** dans l'état assemblé dans le renfoncement (52) de l'élément de recouvrement en forme de capuchon (66), les canaux (80, 82) au niveau du côté intérieur (78) de l'élément de recouvrement en forme de capuchon (66) assurent le passage de l'air (30) depuis l'ouverture d'entrée (74) jusqu'à l'au moins une ouverture (62) dans l'espace de pression de référence (40).

4. Unité de compensation de pression (10) selon la revendication 1, **caractérisée en ce que** la membrane de filtre (64) est supportée par les rehaussements (81) contre le côté intérieur (78) et un passage d'air à travers les canaux (80, 82) a lieu.

5. Utilisation de l'unité de compensation de pression (10) selon l'une quelconque ou plusieurs des revendications précédentes en association avec un capteur de pression de réservoir, en particulier dans le réservoir de carburant d'un véhicule automobile.
